# EUROPÄISCHE PATENTSCHRIFT

(11) **EP 1 044 093 B1**
(45) Veröffentlichungstag und Bekanntmachung des Hinweises auf die Patenterteilung: **16.01.2002**
(21) Anmeldenummer: 98949005.7
(22) Anmeldetag: 05.10.1998
(51) Int. Cl.: B29C 47/00, B29C 49/00, C08G 63/78, G02B 6/44, H01B 3/42

(54) **VERWENDUNG VON HOCHMOLEKULAREN POLYESTERFORMMASSEN**
USE OF HIGH-MOLECULAR POLYESTER MOULDING MATERIALS
UTILISATION DE MATIERES DE MOULAGE EN POLYESTER DE POIDS MOLECULAIRE ELEVE

(30) Priorität: 17.10.1997 DE 19745921
(43) Veröffentlichungstag der Anmeldung: 18.10.2000
(73) Patentinhaber: BASF AKTIENGESELLSCHAFT, 67056 Ludwigshafen (DE)
(72) Erfinder: HEITZ, Thomas, D-67125 Dannstadt-Schauernheim (DE); BRAUNE, Peter, D-55234 Erbes-Büdesheim (DE); FISCH, Herbert, D-67157 Wachenheim (DE); PELLKOFER, Erich, D-67112 Mutterstadt (DE); SCHNEIDER, Georg, D-67069 Ludwigshafen (DE)
(86) Internationale Anmeldenummer: EP9806302
(87) Internationale Veröffentlichungsnummer: WO9920452

(56) Entgegenhaltungen:
- EP-A- 0 039 155
- WO-A-90/06842
- WO-A-96/35571
- DE-A- 19 509 551
- US-A- 5 026 790
- PATENT ABSTRACTS OF JAPAN vol. 097, no. 001, 31. Januar 1997 & JP 08 227030 A (POLYPLASTICS CO), 3. September 1996 in der Anmeldung erwähnt

## Beschreibung

Die Erfindung betrifft die Verwendung von thermoplastischen Polyesterformmassen, enthaltend
A) 80 bis 100 Gew.-% eines Polyalkylenarylates mit einer Halbwertsbreite der Kristallisationsisothermen von ≤ 5°C
B) 0 bis 20 Gew.-% weiterer Zusatzstoffe,
wobei die Gewichtsprozente der Komponenten A) und B) 100 % ergeben,
zur Herstellung von Formkörpern durch Blasformen, Profilextrusion und/oder Rohrextrusion.

Weiterhin betrifft die Erfindung Verfahren zur Herstellung der erfindungsgemäßen verwendbaren Formmassen und die hierbei erhältlichen Formkörper.

Polyester zeichnen sich durch eine geringe Wasseraufnahme und gute Dimensionsstabilität sowie Lösungsmittelbeständigkeit aus.

Abmischungen von Polyestern mit anderen Zusatzstoffen sind seit langem bekannt. Die bekannten Polyester lassen sich aber nur bedingt zu Blasformkörpern verarbeiten. Beim Blasformen wird allgemein ein Schlauch aus Polymerschmelze extrudiert, der zwischen den beiden Halbschalen des geöffneten Werkzeuges hängt. Anschließend wird das Werkzeug geschlossen und der Polymerschlauch durch Gas-Innendruck gegen das Werkzeug gepreßt, abgekühlt und entformt.

Wesentliche Voraussetzung bei dieser Verarbeitung ist, daß der Polymerschlauch beim Extrudieren in den Zeiträumen, wo er frei zwischen den Werkzeugen hängt, nicht abreißt, so daß der Formungsvorgang zu Ende geführt werden kann. Wünschenswert ist darüber hinaus auch, daß der Schlauch nicht "durchhängt", da hierbei geringe Wandstärken in der oberen Hälfte und dickere Wandstärken in der unteren Hälfte entstehen. Hohlkörper mit unterschiedlichen Wandstärken sind zur Verwendung nicht geeignet, da die Belastbarkeit in der Regel von der Stelle mit der geringsten Wandstärke begrenzt wird. Die aus dem Stand der Technik bekannten Formmassen lassen sich daher nur sehr beschränkt für das Blasformverfahren verwenden, da die Schlauchfestigkeit zu gering ist.

Üblicherweise wurden zum Blasformen hochmolekulare Polyester eingesetzt, welche diskontinuierlich hergestellt werden z.B. durch Polykondensation und anschließende Festphasennachkondensation wie beispielsweise in der DD-A 138074, DE-A 30 12 692 und DE-A 30 22 076 beschrieben.

Nachteilig an diesen Verfahren sind lange Verweilzeiten und eine unerwünschte Gelbfärbung des entstehenden Polyesters durch thermische Belastung.

Das Konfektionieren hochmolekularer Polyester mit anderen Zusatzstoffen, die je nach Art und Menge die gewünschten Eigenschaften und die Verarbeitung des Polyesters beeinflussen, ist aber nicht möglich, da beim Konfektionieren ein Molekulargewichtsabbau eintritt, so daß - auch bei Verwendung von hochmolekularen Ausgangspolymeren - in jedem Fall zum Blasformen ungeeignete Massen entstehen.

Die Verwendung von Polyestern, insbesondere Polybutylenterephthalat (PBT) zur Herstellung von Lichtwellenleiterummantelungen ist beispielsweise aus DD-A 258 859, DE-A 43 03 116, DE-A 42 12 146, DE-A 42 19 607, DE-A 41 42 047 und EP-A 336 806 bekannt.

Gemäß JP-A 08/227 030 weist ein zur Umhüllung von optischen Lei-tern geeignetes PET eine intrinsische Viskosität von 1,2, einen Carboxylendgruppengehalt von 40 meq/kg PBT sowie Nukleierungsmittel, Phosphorverbindungen und sterisch gehinderte Phenole als Stabilisatoren auf. Die Differenz von Schmelzpunkt zu Kristallisationsanfangstemperatur sollte > 30 sein.

JP-A 08/146 261 beschreibt zur Verbesserung der Gebrauchseigenschaften die Zugabe von Polycarbonat und Stabilisatoren zu Polyestern.

Die aus dem Stand der Technik bekannten Polyester eignen sich nur bedingt für sog. Extrusionsanwendungen, insbesondere für Lichtwellenleiter(LWL)-Umhüllungen.

Dies ist einmal stoffbedingt z. B. hat PBT eine nur mäßig ausgeprägte Kristallisationstendenz. Zum anderen kommen die speziellen Prozeßbedingungen bei der LWL-Herstellung erschwerend hinzu. Die Herstellung erfolgt im Extrusionsverfahren mittels Querspritzkopf (ähnlich Kabelummantelung), bei dem häufig mit kaltem Wasserbad und auch kaltem Gel (Innenfüllung der Rohre) gearbeitet wird; des weiteren üben die hohen Abzugsgeschwindigkeiten eine zusätzliche abschreckende bzw. unterkühlende Wirkung aus. Der etwa 260-270°C heiße Schmelzeschlauch wird unmittelbar nach dessen Austritt aus dem Querspritzkopf (mm bzw. einige cm) einem kalten Gel bzw. Wasser ausgesetzt.

Wenn der Polyester keine ausreichend starke Kristallisationsneigung hat, setzt in diesem kritischen Bereich eine Unterkühlung der Schmelze ein. Dadurch wird eine ausreichende Kristallisation der Schmelze (und damit deren Verfestigung) so weit unterdrückt, daß das Extrudat von den Nachfolgeeinrichtungen (Abzug usw.) zu einem ovalen Querschnitt deformiert wird.

Weitere Folge einer geringen Kristallisationsneigung sind beispielsweise schlechte mechanische Eigenschaften, geringe Dimensionsstabilität und ungenügende Hydrolysebeständigkeit (letzteres wird allerdings auch durch die Höhe der Carboxylendgruppen bestimmt).

Auf die Funktionstüchtigkeit der Lichtwellenleiter haben folgende Parameter des Extrudates deutlichen Einfluß:

### Extrudat-Oberfläche:

Rauhe unebene Oberflächen (auf der Innenseite) führen zu einem Anstieg der Dämpfung der Glasfasern und damit zu einer Beeinträchtigung der Übertragungsqualität. Gefordert ist eine Längendifferenz der Querschnittshauptachsen von 0,05 mm, entsprechend < 2 % des Außendurchmessers.

### Rundheit:

Unzulässige Abweichungen in der Rundheit führen zu sogenannten Verseilgebilden, die nicht mehr symmetrisch sind und dadurch die Kapazität eines Kabelbündels limitieren.

### Hydrolysebeständigkeit:

Das Rohrmaterial muß ausreichend resistent sein gegen Wasser oder feuchte Atmosphäre, so daß auch nach längerer Zeit eine problemlose Montage ohne Bruchgefahr möglich ist. Die Nachschrumpfung sollte < 1 % sein.

### Nachschrumpfung:

Bei zu hoher Nachschrumpfung verengt sich der Rohrquerschnitt, so daß die Glasfäden weniger Platz haben, deren Dämpfung ansteigt und die Übertragungsqualität leidet.

Der vorliegenden Erfindung lag die Aufgabe zugrunde, hochmolekulare gut kristallisierende Polyesterformmassen zur Verfügung zu stellen, die sich kontinuierlich und unabhängig von der Art der Einsatzstoffe problemlos zu Blasformkörpern, Profilextrudaten oder Rohrextrudaten verarbeiten lassen.

Die Formkörper sollten gute Oberflächen und gute Dimensionsstabilität (Kalibergenauigkeit), Hydrolysebeständigkeit sowie eine geringe Nachschrumpfung aufweisen.

Erfindungsgemäß wird diese Aufgabe durch die Verwendung von Polyesterformmassen gemäß Anspruch 1 gelöst. Bevorzugte Ausführungsformen und Verfahren zur Herstellung sind den Unteransprüchen zu entnehmen.

Als Komponente (A) enthalten die erfindungsgemäßen verwendbaren Formmassen 80 bis 100, bevorzugt 90 bis 100, 50 bis 85 Gew.-% eines thermoplastischen Polyalkylenarylates.

Allgemein werden Polyester auf Basis von aromatischen Dicarbonsäuren und einer aliphatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure und Terephthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsaure, Sepacinsaure, bodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethylanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat und Polybutylenterephthalat oder deren Mischungen bevorzugt.

Insbesondere bevorzugt sind Polyester, deren Carboxylendgruppengehalt bis zu 50 meq/kg, bevorzugt bis zu 30 meq/kg und insbesondere bis zu 27 meq/kg Polyester beträgt. Derartige Polyester können beispielsweise in Anlehnung an das Verfahren der DE-A 44 01 055 hergestellt werden. Der Carboxylendgruppengehalt wird üblicherweise durch Titrationsverfahren (z.B. Potentiometrie) bestimmt.

Die Viskositätszahl der Polyester (A) beträgt nach der kontinuierlichen Schmelzekondensation mindestens 158 ml/g, vorzugsweise 168 ml/g und insbesondere mindestens 170 ml/g, gemessen in einer 0,5 gew.-%igen Lösung in einem Phenol/o-Dichlorgemisch (Gewichtsverhältnis 1:1) bei 25°C (gemäß DIN 53728).

Unter der Halbwertsbreite der Kristallisationsexothermen versteht man im allgemeinen deren Breite (in °C) bei halber Höhe. Die Kristallisationsexotherme wird durch DSC (Differential Scanning calonimetry) Messungen bei Abkühl- und Aufheizraten von 20°C/min ermittelt.

Die Halbwertsbreite sollte ≤ 5°C, vorzugsweise 4,5 und insbesondere ≤ 4°C betragen.

Als Komponente B) können die erfindungsgemäß verwendbaren thermoplastischen Formmassen weitere Zusatzstoffe und Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmence, pulverförmige Füll- und Verstärkungsmittel, Keimbildungsmittel, Weichmacher usw. enthalten, deren Anteil in der Regel 5 nicht mehr als 20 Gew.-% bevorzugt nicht mehr als 10 Gew.-% beträgt.

Als Beispiele für Oxidationsverzögerer und Wärmestabilisatoren sind sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarineblau und Ruß als Farbstoffe zugesetzt werden, sowie pulverförmige Füllstoffe und Verstärkungsmittel. Beispiele für letztere sind Mineralien, amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 20 Gew.-%, bevorzugt bis 10 Gew.-% und insbesondere bis zu 5 Gew.-%.

Als Keimbildungsmittel können Natriumphenylphosphinat, Aluminiumoxid, Siliziumdioxid, Nylon 22 sowie bevorzugt Talkum eingesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) oder Esterderivate (z.B. Stearylstearat oder Pentaerythrittetrastearat) sowie Amidderivate (z.B. Ethylen-bis-stearylamid), welche vorzugsweise in Mischung mit 1,6-Hexandiol eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorethylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z. B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Zur besseren Verträglichkeit mit dem thermoplastischen Polyester sind Minerale und Füllstoffe gegebenenfalls mit einem Haftvermittler ausgerüstet. Bevorzugt sind Glycidyl-, Vinyl- und Aminoalkyltrialkoxysilane.

Als bevorzugte Additive zur Verbesserung der Oberfläche seien Polycarbodiimide (PCDI) genannt, insbesondere solche der allgemeinen Formel: 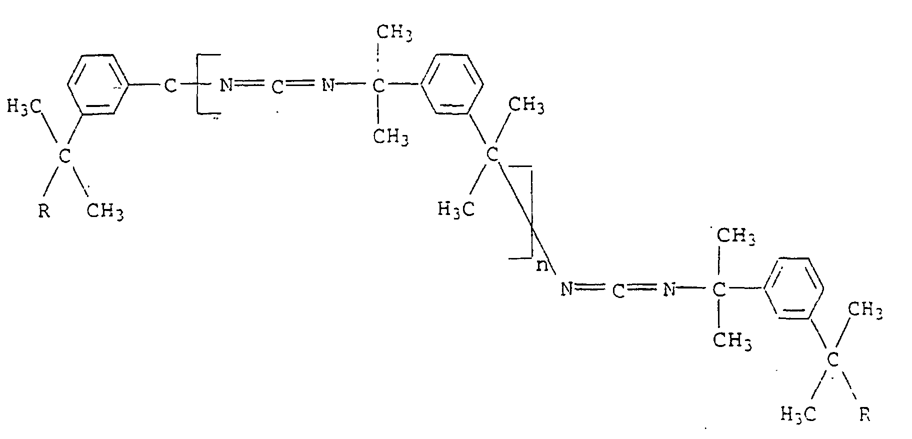 in der
- R: gleich oder verschieden und ausgewählt ist aus der Gruppe der -NCO-, -NHCONHR¹-, -NHCONR¹R²- und -NHCOOR³-Reste, wobei
- R¹ und R²: gleich oder verschieden sind und einen Alkyl-, Cycloalkyl-, oder Aralkylrest bedeuten und
- R³: gleich R¹ oder ein Alkoxypolyoxyalkylenrest ist und
- n: eine ganze Zahl von 0 bis 10 ist.

Derartige PCDI's sowie Verfahren zu ihrer Herstellung sind u.a. der WO-A 96/17011 zu entnehmen. Die PCDI's sind in einer Menge bis zu 3, vorzugsweise bis zu 2 Gew.-% in den Polyesterformmassen enthalten.

Die Herstellung der erfindungsgemäß verwendbaren Polyesterformmassen erfolgt kontinuierlich, indem man
a) in einer ersten Stufe eine aromatische Dicarbonsäure oder deren Ester bzw. esterbildende Derivate mit einem molaren Überschuß einer Dihydroxyverbindung verestert bzw. umestert,
b) in einer zweiten Stufe das gemäß a) erhaltene Umesterungs- bzw. Veresterungsprodukt vorkondensiert und
c) in einer dritten Stufe das aus b) erhältliche Produkt auf eine VZ von mindestens 158 ml/g polykondensiert, wobei man die Stufe a) und die Stufe b) des Verfahrens in mindestens zwei Temperaturzonen durchführt und vor oder nach der Polykondensation c) gegebenenfalls die Komponente(n) B zugibt.

Die Stufe a) des Verfahrens wird als sogenannte Umesterungs- bzw. Veresterungsreaktion bezeichnet. Diese wird in mindestens zwei, vorzugsweise mindestens drei Temperaturzonen durchgeführt. Die Temperatur der folgenden Zone sollte hierbei 1-40, vorzugsweise 2-30 und insbesondere 5-10°C höher als die Temperatur der vorherigen Zone sein. Der Temperaturbereich für die gesamte Veresterungsreaktion liegt im allgemeinen (je nach Einsatzstoff) bei 165 bis 260, vorzugsweise 170 bis 250 und insbesondere bei 180 bis 240°C, der Druck beträgt im allgemeinen von 1 bis 10, vorzugsweise von 1 bis 4 und insbesondere von 1 bis 2 bar.

Vorzugsweise führt man die Stufe a) des Verfahrens so aus, daß man in mindestens zwei Temperaturzonen bei weitestgehend gleichen Druckverhältnissen in den einzelnen Zonen arbeitet. Die cechnischen Voraussetzungen wie Apparaturen (z.B. in Form von Kesselkaskaden) zur Schaffung von unterschiedlichen Temperaturzonen sind dem Fachmann bekannt, weshalb sich weitere Einzelheiten hierzu erübrigen.

Die Einsatzstoffe wie Diole und Säuren wurden bereits vorstehend (Komponente A) beschrieben.

Für die Umsetzung wird üblicherweise ein molarer Uberschuß von Diol eingesetzt, um das Estergleichgewicht in der gewünschten Form zu beeinflussen. Die Molverhältnisse Dicarbonsäure bzw. Dicarbonsäureester : Diol betragen üblicherweise 1:1,1 bis 1:3,5 vorzugsweise 1:1,2 bis 1:2,2. Ganz besonders bevorzugt sind Molverhältnisse Dicarbonsäure:Diol von 1:1,5 bis 1:2, sowie Diester:Diol von 1:1,25 bis 1,5.

Es ist jedoch auch möglich mit einem geringeren Überschuß an Diol in der ersten Zone die Esterreaktion durchzuführen und entsprechend in den weiteren Temperaturzonen weitere Mengen Diol zuzugeben. In der bevorzugten Ausführungsform des erfindungsgemäßen Verfahrens mit drei Temperaturzonen wird das gesamte Diol in 3 Zonen prozentual wie folgt aufgeteilt: 60 bis 85 (1), 10 bis 25 (2) und 5-15 (3), vorzugsweise: 70 bis 80 (1), 10 bis 20 (2), 5 bis 10 (3).

Die Verweilzeiten betragen für die gesamce Stufe a) 140 bis 300, vorzugsweise von 150 bis 260 und insbesondere von 160 bis 220 Min., die Verweilzeit für die erste Zone beträgt von 100 bis 190, vorzugsweise von 110 bis 150; für die zweite Zone von 65 bis 140, vorzugsweise von 65 bis 110 Min. Für die bevorzugte Ausführungsform mit 3 Zonen beträgt die Verweilzeit in der 3. Zone 15 bis 45, vorzugsweise 15 bis 30 Min, wobei sich die Verweilzeiten in der 2. Zone entsprechend verringern und in der 1. Zone wie oben ausgeführt beibehalten werden.

In der bevorzugten Ausführungsform des erfindungsgemäßen Verfahrens nehmen die Verweilzeiten von der ersten Zone zur dritten Zone im Verhältnis vorzugsweise 6:3:1 ab.

Vor der Stufe a) des Verfahrens wird in einer besonders bevorzugten Ausführungsform zur Dihydroxyverbindung zunächst ein Katalysator und anschließend eine (Erd)alkalimetallverbindung zugesetzt.

Bevorzugte Katalysatoren sind Titanverbindungen und Zinnverbindungen wie sie u.a. aus den US 39 36 421, US 43 29 444 Patentschriften bekannt sind. Als bevorzugte Verbindungen seien Tetrabutylorthotitanat und Triisopropyltitanat sowie Zinn-di-octoat genannt, welche üblicherweise in der Stufe a) in Mengen von 20 bis 150, vorzugsweise von 20 bis 120 und insbesondere von 30 bis 70 ppm (bezogen auf das Metall) eingesetzt werden.

Zur weiteren Reduzierung des Carboxylendgruppengehaltes des Polyesters kann es vorteilhaft sein, vor der Umsetzung der Ausgangsmonomeren 0,1 bis 10 mmol, vorzugsweise 0,2 bis 0,65 mmol, pro kg -Polyester, einer Alkalimetallverbindung oder Erdalkalimetallverbindung (berechnet als Alkalimetall bzw. Erdalkalimetall) zuzugeben. Derartige Verbindungen werden in der DE-A 43 33 930 vorgeschlagen. Als bevorzugte Verbindungen seien Natriumcarbonat, Natriumacetat, und Natriumalkoholate, insbesondere Natriummethanolat genannt.

Die Umesterungs- bzw. Veresterungsprodukte werden anschießend in die Vorkondensationsstufe b) kontinuierlich überführt.

Diese weist mindestens zwei, vorzugsweise mindestens drei und insbesondere mindestens vier Temperaturzonen auf. Die Temperatur der folgenden Zone liegt hierbei 1 bis 40, vorzugsweise 2- 30 und insbesondere 5-20°C höher als die Temperatur der vorherigen Zone. Der Temperaturbereich für die gesamte Vorkondensation liegt im allgemeinen (je nach Einsatzstoffen ) bei 220 bis 300, vorzugsweise bei 225 bis 290 und insbesondere bei 240 bis 290°C.

Bevorzugt erfolgt die Vorkondensation in der Weise, daß in der ersten Zone der Druck 0,5 bis 1 bar, vorzugsweise 0,6 bis 0,8 bar beträgt und in der zweiten bzw. letzten Zone 20 bis 200, vorzugsweise 25 bis 150 mbar und insbesondere 50 bis 150 mbar beträgt. Technisch kann hierfür z.B. ein senkrecht stehender Rohrbündelreaktor verwendet werden, andere Reaktoren zur Durchführung sind dem Fachmann bekannt.

Die Verweilzeiten betragen für die gesamte Stufe b) des Verfahrens von 10 bis 80, vorzugsweise von 15 bis 50 und insbesondere von 20 bis 40 Min.

In einer besonders bevorzugten Ausführungsform des erfindungsgemäßen Verfahrens werden vier Temperaturzonen verwendet, wobei von Zonen zu Zone die Temperatur in den oben beschriebenen Verhältnissen steigt und der Druck von der ersten bis zur vierten Zone innerhalb der beschriebenen Grenzen reduziert wird. Die vierte Zone besteht bei dieser bevorzugten Ausführungsform des Rohrbündelwärmetauschers aus einer Vorrichtung zur Trennung von Dampf- und Flüssigphase (auch als Brüdentrenngefäße bereichnet), wobei das Verhältnis des Volumens des Trenngefäßes zum Volumen in den Rohren vorzugsweise 5 bis 15: 1, insbesondere 8 bis 13: 1 beträgt.

Die Volumenverhältnisse der ersten drei Zonen sind in dieser besonders bevorzugten Ausführungsform so gestaltet, daß die erste Zone von 30 bis 60, vorzugsweise 50 %, die zweite Zone von 20 bis 40, vorzugsweise 30 % und die dritte Zone von 10 bis 30, vorzugsweise 20 % anteilig an Volumen (Volumenverhältnisse) ausmachen. Nachstehend sind die Temperaturbereiche , Druckbereiche und Verweilzeiten für die besonders bevorzugte Ausführungsform des erfindungsgemäßen Verfahrens aufgeführt:
1. Zone: Temperatur von 230 bis 270, vorzugsweise von 240 bis 250°C, Druck von 0,6 bis 0,9, vorzugsweise von 0,7 bis 0,9 bar.
   Verweilzeit von 10 bis 30, vorzugsweise von 15 bis 25 Min.
2. Zone: Temperatur von 240 bis 280, vorzugsweise von 250 bis 270°C, Druck von 0,2 bis 0,6, vorzugsweise von 0,3 bis 0,5 bar.
   Verweilzeit von 5 bis 25, vorzugsweise von 7 bis 15 Min.
3. Zone: Temperatur von 245 bis 290 vorzugsweise von 250 bis 280°C, Druck von 0,1 bis 0,3, vorzugsweise von 0,1 bis 0,25 bar.
   Verweilzeit von 5 bis 10, vorzugsweise von 4 bis 8 Min.
4. Zone: Temperatur von 250 bis 300 vorzugsweise von 252 bis 285°C, Druck von 0,015 bis 0,2, vorzugsweise von 0,025 bis 0,15 bar.
   Verweilzeit von 10 bis 30, vorzugsweise von 14 bis 24 Min.

Die vorstehend bei Stufe a) des Verfahrens genannten Katalysatoren und weitere Zusatzstoffe können in den genannten Mengen in die Stufe b) des Verfahrens zudosiert werden.

Nach der Stufe b) des erfindungsgemäßen Verfahrens weist das Polyesterpräpolymer eine Viskositätszahl von 15 bis 50, vorzugsweise von 20 bis 30 ml/g auf, gemessen als 0,5 Gew.-% Lösung in Phenol/o-Dichlorbenzol (1:1) gemäß DIN 53728, Teil 3 (1985) bei 25°C.

Das Polyesterpräpolymer wird anschließend in die Stufe c) des erfindungsgemäßen Verfahrens überführt. Diese wird vorzugsweise einstufig durchgeführt bei Temperaturen von 240 bis 290, vorzugsweise von 240 bis 270 und insbesondere 240 bis 265°C. Der Druck beträgt von 0,3 bis 10, vorzugsweise 0,3 bis 5 und insbesondere 0,3 bis 2 mbar.

Die Verweilzeiten betragen üblicherweise 30 bis 180, vorzugsweise von 35 bis 150 Min.

Während der Polykondensation kann man vorzugsweise eine Oberflächenerneuerung des Produktes vornehmen. Oberflächenerneuerung bedeutet, daß ständig neues Polymeres an die Oberfläche der Schmelze gelangt, so daß der Austritt des Diols erleichtert wird.

Diese beträgt vorzugsweise 1 bis 20 und insbesondere 1,5 bis 6 m²/kg Produkt und Minute.

Es kann weiterhin von Vorteil sein, auch in dieser Stufe des Verfahrens Katalysatoren und andere Zusatzstoffe zuzugeben, wie sie vorstehend beschrieben wurden.

Das Produkt wird anschließend mittels üblicher Vorrichtungen entgast,als Strang ausgetragen, gekühlt und zu Granulat verarbeitet.

Nach der kontinuierlichen Polykondensation weist der Polyester eine Viskositätszahl von mindestens 158, vorzugsweise von 168 ml/g auf, bestimmt in einer 0,5 gew.%igen Lösung in einem Phenol/o-Dichlorbenzolgemisch (Gew.-Verh. 1:1 bei 25°C) gemäß DIN 53728, 3. Teil (1985).

Die gemäß dem vorstehend beschriebenen Verfahren erhältlichen hochmolekularen Polyester zeigen eine große Kristallisationsneigung.

Deshalb eignen diese sich zur Herstellung von Blasformkörpern, Profil- und Rohrextrudaten jeglicher Art, insbesondere für Kabelumhüllungen und Lichtwellenleiterumhüllungen. Die Formkörper weisen gute mechanische Eigenschaften, eine gute Dimensionsstabilität und Hydrolysebeständigkeit neben einer guten Oberfläche und einer geringen Rückschrumpfung auf.

### Beispiele

### Beispiel 1

### Stufe a)

In einer kontinuierlichen Weise wurden pro Stunde 881,8 g Dimethylterephthalat (DMT) und 563,7 g 1,4-Butandiol (BD) in einen Rührreaktor eingespeist. In das Butandiol wurde dabei kontinuierlich vor Kontaktieren des DMT mit - in Folge - 781,8 mg Tetrabutylorthotitanit und 99 mikro 1 einer 30 Gew.-% Lösung von MaOCH₃ in Methanol eingemischt.

Die Temperatur in der ersten Reaktionszone betrug 185°C bei einem Druck von 1 bar und einer mittleren Verweilzeit von 184 min.

Die Temperatur in der zweiten Reaktionszone betrug 205°C bei einem Druck von 1 bar und einer mittleren Verweilzeit von 65 min.

Die Temperatur in der dritten Reaktionszone betrug 210°C bei einem Druck von 1 bar und einer mittleren Verweilzeit von 41 min.

Die hierbei anfallenden Destillate wurden in einem Kolonnensystem getrennt, wobei DMT und BD in die Reaktion zurückgeführt wurden.

### Stufe b)

Mit einem Umsatz von 94 % wurde das Umesterungsprodukt einem senkrecht stehenden Rohr zugeführt, das in 4 Heizzonen unterteilt war.

Die Temperatur in der ersten Reaktionszone betrug 245°C bei einem Druck von 700 mbar und einer mittleren Verweilzeit von 22 min.

Die Temperatur in der zweiten Reaktionszone betrug 250°C bei einem Druck von 400 mbar und einer mittleren Verweilzeit von 12 min.

Die Temperatur in der dritten Reaktionszone betrug 255°C bei einem Druck von 150 mbar und einer mittleren Verweilzeit von 6 min.

Die Temperatur in der vierten Reaktionszone betrug 255°C bei einem Druck von 50 mbar und einer mittleren Verweilzeit von 18 min.

Das überschüssige BD und die Reaktionsprodukte wie THF und Wasser wurden am oberen Ende des Reaktionsrohres abgetrennt und aufgearbeitet.

### Stufe c)

Das Vorkondensat wurde ohne weitere Zugabe von Katalysatoren in einen Polykondensationsreaktor überführt.

Die Temperatur in der Reaktionszone betrug 255°C bei einem Druck von 0,5 mbar und einer mittleren Verweilzeit von 115 min.

Das erhaltene Produkt besaß eine VZ von 164 ml/g und einen Carboxylendgruppengehalt (CEG) von 23 meq/kg, einen Gelbgrad von ΔB 1,9 gegen Weißstandard und eine Halbwertsbreite der Kristallisationsexotherme von 3,1°C.

### Beispiel 2

Die Durchführung des Beispiels erfolgte analog Beispiel 1, jedoch mit einer Temperatur in der Stufe c) von 257°C bei einem Druck von 0,5 mbar und einer mittleren Verweilzeit von 130 min und einer Oberflächenerneuerung von 4 m²/h*kg PBT. Es wurde ein Produkt mit einer VZ von 169 ml/g und einem CEG von 20 meq/kg, einen Gelbgrad von ΔB 2,3 gegen Weißstandard und einer Halbwertsbreite der Kristallisationsexotherme von 3,1°C erhalten.

### Beispiel 3

Die Durchführung des Beispiels erfolgte analog Beispiel 1, jedoch mit einer Temperatur in der Stufe c) von 257°C bei einem Druck von 0,5 mbar und einer mittleren Verweilzeit von 140 min und einer Oberflächenerneuerung von 6,2 m²/h*kg PET. Es wurde ein Produkt mit einer VZ von 187 ml/g und einem CEG von 23 meq/kg, einen Gelbgrad von ΔB 2,5 gegen Weißstandard und einer Halbwertsbreite der Kristallisationsexotherme von 3,4°C erhalten.

### Beispiel 4

Das Experiment wurde wie in Beispiel 1 beschrieben durchgeführt; wobei der Schmelze nach dem Endreaktor aber vor der Abkühlung 0,5 Gew.-% eines Stearates des Pentaerythrits zugemischt wurde.

Das erhaltene Produkt besaß eine VZ von 167 ml/g und einen CEG von 24 meq/kg, einen Gelbgrad von ΔB 2 gegen Weißstandard und eine Halbwertsbreite der Kristallisationsexotherme von 3,3°C.

### Vergleichsbeispiel A

Das Experiment wurde wie in Beispiel 1 beschrieben durchgeführt; wobei die Temperatur 265°C und die Verweilzeit 145 Min. in der Stufe c) betrug.

Das erhaltene Produkt besaß eine VZ von 142 ml/g und einer. CEG von 31 meq/kg, einen Gelbgrad von ΔB 2,0 gegen Weißstandard.

Das Produkt wurde bei 205°C unter N₂-Strom in fester Phase nachkondensiert.

Das nach der Festphasenkondensation erhaltene Produkt besaß eine VZ von 160 ml/g einen CEG von 39 meq/kg, einen Gelbgrad von ΔB 3,8 gegen Weißstandard und eine Halbwertsbreite der Kristallisationsexotherme von 8,7°C.

### Vergleichsbeispiel B

Das Experiment wurde wie in Beispiel 1 beschrieben durchgeführt; wobei die Temperatur in der Stufe c) 255°C bei einem Druck von 0,8 mbar und einer mittleren Verweilzeit von 105 min betrug.

Das erhaltene Produkt besaß eine VZ von 124 ml/g und einen CEG von 24 meq/kg. Das Produkt wurde bei 205°C unter N₂-Strom bis zu einer VZ von 176 ml/g kondensiert. Das nach der Festphasenkondensation erhaltene Produkt besaß einen CEG von 19 meq/kg, einen Gelbgrad von ΔB 3,2 gegen Weißstandard und eine Halbwertsbreite der Kristallisationsexotherme von 6,1°C.

Die VZ wurde bei 25°C an einer 0,5 % Lösung des Polymeren in einem 1:1-Gemisch aus Phenol/o-Dichlorbenzol gemessen.

Die Kristallisation wurde mittels DSC nach einmaligem Aufschmelzen bis 250°C mit einer Kühlrate von 20°C/min gemessen. Die Halbwertsbreite wurde bestimmt als Breite des Kristallisationspeaks (in oC) gemessen bei halber Strecke zwischen Basislinie und Peakmaximum.

Die Carboxylendgruppen (CEG) wurde durch potentiometrische Titration der bei Umsetzen einer in Nitrobenzol gelösten Probe des Polymeren mit einem definierten Überschuß an Kaliumacetat freigesetzten Essigsäure bestimmt.

Der Gelbwert ΔB wurde gemäß DIN 5033 Teil 6 gegen einen Weißstandard bestimmt.

### Verarbeitung zu Extrudaten

Die aus den Beispielen 1 bis 4 sowie den Vergleichsbeispielen A und B erhaltenen Produkte wurden auf einer zur Herstellung von Lichtwellenleiterkabeln üblichen Anlage, z.B. einem 45 mm Einwellenextruder der Fa. Nokia-Maillefer zu Hohlrohren mit einem Innen- und einem Außendurchmesser von 1,9 bzw. 2,5 mm extrudiert.

Die Massetemperatur betrug 260°C.

Die maximal mögliche Abzugsgeschwindigkeit als Maß für die Güte des Produktes für die Extrusionsanwendung geht aus der Tabelle hervor.

Die beurteilten Verarbeitungs- und Produktparameter wurden visuell beurteilt:
Rundheit: Maß für die Ovalität des Rohrquerschnitts.

Nachschrumpfung: Längenabnahme bei Lagerung von ungespannten Rohrabschnitten bei 70°C für 3 min.

Die Hydrolysestabilität wurde durch Lagerung von Extrudaten bei einer Temperatur von 85°C und bei einer relativen Feuchte von 85 % über einen Zeitraum von 60 Tagen bestimmt.

Der Hydrolysetest gilt als bestanden, wenn die am gelagerten Extrudat gemessene VZ noch einen Mindestwert von > 70 ml/g hat.

Die Ergebnisse der Messungen sind der Tabelle zu entnehmen.

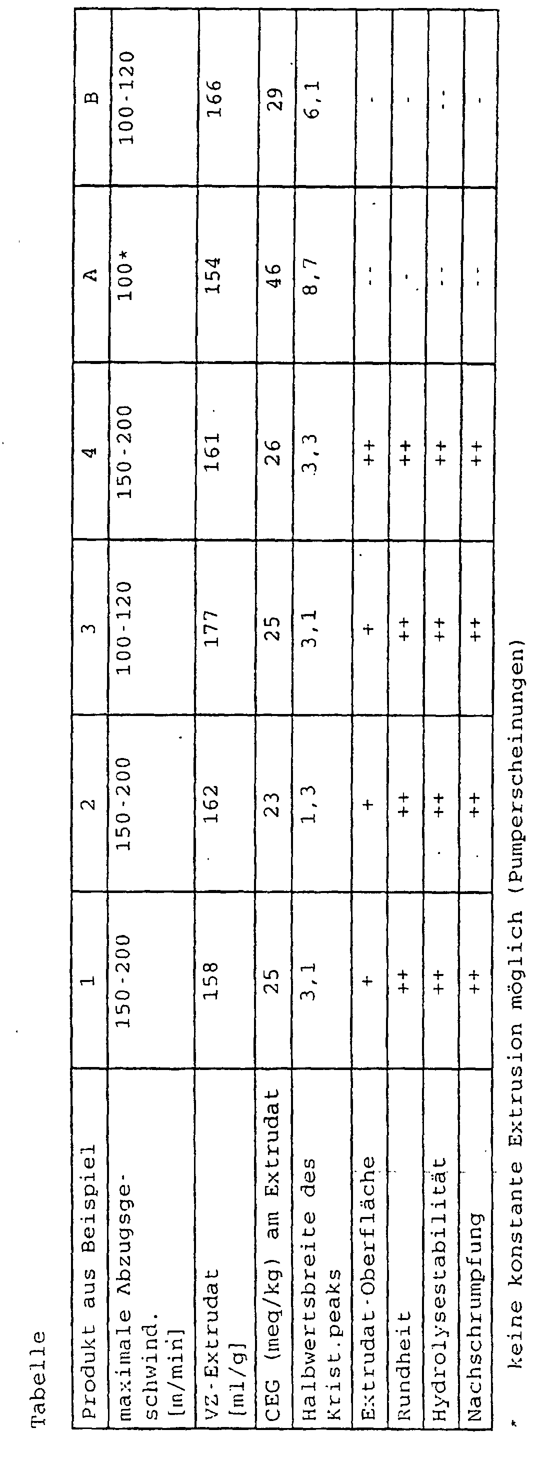

## Patentansprüche

1. Verwendung von thermoplastischen Polyesterformmassen, enthaltend
A) 80 bis 100 Gew.-% eines Polyalkylenarylates mit einer Halbwertsbreite der Kristallisationsexothermen von ≤ 5°C
B) 0 bis 20 Gew.-% weiterer Zusatzstoffe,
wobei die Gewichtsprozente der Komponenten A) und B) 100 % ergeben,
zur Herstellung von Formkörpern durch Blasformen, Profilextrusion und/oder Rohrextrusion,
**dadurch gekennzeichnet, daß** man
a) in einer ersten Stufe eine aromatische Dicarbonsäure oder deren Ester bzw. esterbildende Derivate mit einem molaren Überschuß einer Dihydroxyverbindung verestert bzw. umestert,
b) in einer zweiten Stufe das gemäß a) erhaltene Umesterungs- bzw. Veresterungsprodukt vorkondensiert und
c) in einer dritten Stufe das aus b) erhältliche Produkt auf eine VZ von mindestens 158 ml/g polykondensiert,
wobei man die Stufe a) und b) des Verfahrens in mindestens zwei Temperaturzonen durchführt und vor oder nach der Polykondensation c) vor Abkühlung der Schmelze gegebenenfalls Komponente B) zugibt und die Dihydroxyverbindung vor der Stufe a) zunächst mit einem Katalysator und anschließend mit einer (Erd)alkaliverbindung versetzt.

2. Verwendung nach Anspruch 1, in denen die Komponente A) einen Carboxylendgruppengehalt von ≤ 30 meq/kg aufweist.

3. Verfahren zur Herstellung der gemäß Anspruch 1 oder 2 verwendbaren Formmassen, **dadurch gekennzeichnet, daß** man die (Erd)alkaliverbindung in Mengen von 0,1 bis 10 mmol berechnet als (Erd)alkalimetall pro kg Polyester zugibt.

4. Verfahren nach Anspruch 4, **dadurch gekennzeichnet, daß** man die Stufe a) und/oder b) des Verfahrens in mindestens 3 Temperaturzonen durchführt.

5. Verfahren nach den Ansprüchen 3 oder 4, **dadurch gekennzeichnet, daß** die Temperatur in der Stufe a) und/oder b) der folgenden Zone 1 bis 40°C höher als die Temperatur der vorherigen Zone ist.

6. Verfahren nach den Ansprüchen 3 bis 5, **dadurch gekennzeichnet, daß** man die Stufe a) unter weitestgehend gleichen Druckverhältnissen und die Stufe b) unter sinkenden Druckverhältnissen durchführt.

7. Verfahren nach den Ansprüchen 3 bis 6, **dadurch gekennzeichnet, daß** man die Stufe c) bei einem Druck unterhalb von 2 mbar durchführt.

8. Blasformkörper, Profilextrudate, Rohrextrudate erhältlich aus den gemäß den Ansprüchen 1 oder 2 verwendbaren Formmassen sowie erhältlich gemäß den Verfahrensbedingungen der Ansprüche 3 bis 7.

9. Kabelummantelungen, Lichtwellenleiterummantelungen, erhältlich aus den gemäß den Ansprüchen 1 oder 2 verwendbaren Formmassen sowie erhältlich gemäß den Verfahrensbedingungen der Ansprüche 3 bis 7.

## Claims

1. The use of a thermoplastic polyester molding material containing
A) from 80 to 100% by weight of a polyalkylene arylate having a half-width of the crystallization isotherms of ≤ 5°C
B) from 0 to 20% by weight of further additives,
the percentages by weight of components A) and B) summing to 100%,
for the production of moldings by blow molding, profile extrusion and/or tube extrusion,
wherein
a) in a first stage, an aromatic dicarboxylic acid or an ester or ester-forming derivative thereof is esterified or transesterified with a molar excess of a dihydroxy compound,
b) in a second stage, the transesterification or esterification product obtained according to a) is subjected to precondensation and
c) in a third stage, the product obtainable from b) is subjected to polycondensation to a VN of at least 158 ml/g, stage a) and b) of the process being carried out in at least two temperature zones and, if required, component B being added to the melt before or after the polycondensation c) and before cooling, and first a catalyst and then an alkali metal compound or alkaline earth metal compound are added to the dihydroxy compound before stage a).

2. The use as claimed in claim 1, in which component A) has a terminal carboxyl group content of ≤ 30 meq/kg.

3. A process for the preparation of a molding material which may be used as claimed in claim 1 or 2, wherein the alkali metal compound or alkaline earth metal compound is added in amounts of from 0.1 to 10 mmol, calculated as alkali metal compound or alkaline earth metal compound, per kg of polyester.

4. A process as claimed in claim 3, wherein stage a) or b) of the process is carried out in at least 3 temperature zones.

5. A process as claimed in either of claims 3 or 4, wherein the temperature in stage a) or b) of the subsequent zone if from 1 to 40°C higher than the temperature of the preceding zone.

6. A process as claimed in any of claims 3 to 5, wherein stage a) is carried out under very substantially the same pressure conditions and stage b) under decreasing pressure conditions.

7. A process as claimed in any of claims 3 to 6, wherein stage c) is carried out at below 2 mbar.

8. A blow molding, extruded profile or extruded tube obtainable from a molding material which may be used as claimed in claim 1 or 2 and obtainable according to the process conditions of any of claims 3 to 7.

9. A cable sheath or optical waveguide sheath obtainable from a molding material which may be used as claimed in claim 1 or 2 and obtainable according to the process conditions of any of claims 3 to 7.

## Revendications

1. Utilisation de masses de moulage de polyester thermoplastiques contenant
A) 80 à 100% en poids d'un poly(arylated'alkylène) d'une largeur de valeur moyenne des exothermes de cristallisation de ≤5°C
B) 0 à 20% en poids d'autres additifs,
les pourcentages en poids des composants A) et B) totalisant 100%,
pour la production de pièces moulées par soufflage, extrusion de profilés et/ou extrusion de tubes,
**caractérisée en ce que**
a) dans une première étape, on estérifie et/ou on transestérifie un acide dicarboxylique aromatique ou ses esters et/ou dérivés estérogènes avec un excès molaire d'un composé dihydroxylé,
b) dans une deuxième étape, on précondense le produit d'estérification ou de transestérification obtenu selon a) et
c) dans une troisième étape, on polycondense le produit que l'on peut obtenir à l'étape b) à un indice de viscosité d'au moins 150 ml/g,
et l'on entreprend l'étape a) et l'étape b) du procédé dans au moins deux zones de température et l'on ajoute éventuellement le composant B) avant ou après la polycondensation c), avant le refroidissement de la masse fondue, et l'on mélange le composé dihydroxylé, avant l'étape a), d'abord avec un catalyseur et ensuite avec un composé de métal alcalin ou alcalino-terreux.

2. Utilisation selon la revendication 1, dans laquelle le composant A) présente une teneur en groupes carboxyle ≤ 30 méq./kg.

3. Procédé de préparation des masses de moulage utilisables selon la revendication 1 ou 2, **caractérisé en ce que** l'on ajoute le composé de métal alcalin ou alcalino-terreux en quantité de 0,1 à 10 mmoles, calculée en métal alcalin ou alcalino-terreux, par kg de polyester.

4. Procédé selon la revendication 3, **caractérisé en ce que** l'on entreprend l'étape a) et/ou l'étape b) du procédé dans au moins 3 zones de température.

5. Procédé selon la revendication 3 ou 4, **caractérisé en ce que** la température dans l'étape a) et/ou b) de la zone suivante est de 1 à 40°C supérieure à la température de la zone précédente.

6. Procédé selon les revendications 3 à 5, **caractérisé en ce que** l'on entreprend l'étape a) sous des rapports de pression pratiquement identiques et l'étape b) sous des rapports de pression décroissants.

7. Procédé selon les revendications 3 à 6, **caractérisé en ce que** l'on entreprend l'étape c) à une pression inférieure à 2 mbar.

8. Articles moulés par soufflage, profils extrudés, tubes extrudés, que l'on peut obtenir à partir des masses de moulage utilisables selon les revendications 1 ou 2, ainsi que ceux que l'on peut obtenir selon les conditions de processus des revendications 3 à 7.

9. Gaines de câbles, gaines pour guides d'ondes optiques, que l'on peut obtenir à partir des masses de moulage utilisables selon les revendications 1 ou 2, et que l'on peut obtenir selon les conditions de processus des revendications 3 à 7.
